(19)

Europäisches Patentamt

European Patent Office

Office européen des brevets

(11) **EP 2 999 202 B1**

(12) **EUROPEAN PATENT SPECIFICATION**

(45) Date of publication and mention
of the grant of the patent:
**13.09.2017 Bulletin 2017/37**

(21) Application number: **14290283.2**

(22) Date of filing: **19.09.2014**

(51) Int Cl.:
*H04M 3/30* *(2006.01)*          *H04L 1/20* *(2006.01)*
*H04B 3/32* *(2006.01)*          *H04L 12/28* *(2006.01)*

(54) **A DEVICE AND THE RELATED METHOD FOR ESTIMATING THE STABILITY OF A DIGITAL SUBSCRIBER LINE**

VORRICHTUNG UND VERFAHREN ZUR SCHÄTZUNG DER STABILITÄT EINER DIGITALEN TEILNEHMERLEITUNG

DISPOSITIF ET PROCÉDÉ ASSOCIÉ POUR ÉVALUER LA STABILITÉ D'UNE LIGNE D'ABONNÉ NUMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.03.2016 Bulletin 2016/12**

(73) Proprietor: **ALCATEL LUCENT**
**92100 Boulogne-Billancourt (FR)**

(72) Inventors:
• **Dupuis, Nicolas**
**6041 Gosselies (BE)**
• **Drooghaag, Benoit**
**6041 Gosselies (BE)**

(74) Representative: **ALU Antw Patent Attorneys**
**Copernicuslaan 50**
**2018 Antwerpen (BE)**

(56) References cited:
**EP-A1- 2 073 446**

• **"Dynamic Line Management for Digital Subscriber Lines", INTERNET CITATION, 8 April 2005 (2005-04-08), XP002442256, Retrieved from the Internet: URL:http://www1.alcatel-lucent.com/com/en/ appcontent/apl/18812_DLM_twp_tcm172-228691 635.pdf [retrieved on 2007-07-12]**
• **JOCHEN MAES ET AL: "Autonomous dynamic optimization for digital subscriber line networks", BELL LABS TECHNICAL JOURNAL, WILEY, CA, US, vol. 15, no. 3, 1 December 2010 (2010-12-01), pages 119-129, XP001558908, ISSN: 1089-7089, DOI: 10.1002/BLTJ.20460**

**Description**

**Technical Field**

The present invention relates to the field of troubleshooting to optimize the performances of the physical or PHY-layer, especially for Digital Subscriber Lines.

**Background**

With the increasing deployment of Internet Protocol Television, also referred to as IPTV solutions, Video-On-Demand offers or Triple-play services, the requirements on both the performances of the system and the customer support become more and more demanding, particularly on Digital Subscriber Lines, also referred to as DSL. The physical link which transports information through wire lines up to the end-user is known to be the bottleneck for the Quality of Service, also referred to as QoS. Additionally, the signal bandwidth of the DSL lines is pushed higher and higher. For example, traditional ADSL technology was using frequencies up to 1.1 MHz, and the current VDSL2 technology can be applied up to 17 or even 30MHz. The extensive use of those higher frequencies as well as more and more advanced solutions to increase the performances of the DSL make the DSL link more sensitive to disturbances, for example to interferences with other devices functioning at frequencies close to the ones of the DSL.

Troubleshooting is the identification or diagnosis of trouble in the management or data flow of a system such as for example a Digital Subscriber Line caused by a failure of some kind. The problem is initially described as a symptom of malfunctioning, and troubleshooting is the process of determining and remedying the causes of these symptom. In the context of Digital Subscriber Lines, troubleshooting improves the action of reporting issues occurring on a line, for which the Quality of Service, perceived or not by an end-user, is consequently degraded. Troubleshooting allows to diagnose one or more events generating the issues on the line. For example, within a pro-active context, troubleshooting aims at identifying the reasons of a possible degradation of the Quality of Service for an end-user before the degradation actually impacts his Quality of Service. Additionally, the troubleshooting process allows to quantify the impact of the identified issues for an end-user of the line. In order to improve the experience of the end-user by improving the Quality of Service of a line, a manual intervention can be performed on the line but requires the intervention of a skilled technician and is not always necessary. An alternative to a manual intervention is for example Dynamic Line Management.

Dynamic Line Management, also referred to as DLM, allows to monitor the performances of the line and to take actions in order to provide a better QoS of the PHY-layer. The DLM consists in dynamically assessing and monitoring the stability of a line in order to take the most suitable action on the PHY parameters to guarantee the stability of the line and to provide the line with the highest bitrate performances under this stable condition. If a fairly stable line is classified as unstable, although the end-user does not feel any practical impacts on its QoS, the DLM will take actions leading to a reduction of the bitrate and/or a lowering of the reactivity of the line. This dramatically decreases the QoS of the offered experience perceived by an end-user. In this case, the satisfaction of the end-user is not improved.

To assess the QoS of a line, i.e. to establish if a line is stable or not, metrics and thresholds have been arbitrary defined from empirical rules. These metrics are computed as the Mean Time Between Errors, also referred to as MTBE, and the Mean Time Between Re-synchronizations, also referred to as MTBR and the classification is performed using thresholds. The MTBE and the MTBR can be split between the Downstream and the Upstream directions, but they can also be merged. For example, information indicative for the MTBE and the MTBR can be defined and comprise a union, a sum value, an average value, etc of the two metrics. The MTBE is an indication of the mean time that a line has to wait before its PHY service is being degraded by corrupted symbols, i.e. by PHY symbols containing impacting errors, for example because of impulse noise. The MTBR is an indication of the mean time before a modem spontaneously synchronizes again because of the weak quality of the link. As these metrics are directly used by the DLM, the offered bitrates are directly related to them. The MTBE and the MTBR are defined as follows:

$$MTBE = \frac{showtime\ (T)}{ErrorEvent\ (T)} \qquad (1)$$

$$MTBR = \frac{showtime\ (T)}{Re\text{-}synchronizations\ (T)} \qquad (2)$$

$$ErrorEvent\ (T) = \omega_1 CV(T) + \omega_2 ES(T) + \omega_3 SES(T) \qquad (3)$$

STABLE:

$$MTBE\ (T) > \Theta_s \quad \text{and} \quad MTBR\ (T) > \Gamma_s \qquad (4)$$

RISKY:

$$\Theta_s > MTBE\ (T) > \Theta_u \quad \text{and} \quad \Gamma_s > MTBR\ (T) > \Gamma_u \qquad (5)$$

UNSTABLE:

$$MTBE\ (T) < \Theta_u \quad \text{and} \quad MTBR\ (T) < \Gamma_u \qquad (6)$$

where $T$ is the time window during the data, such as the amount of Code Violations, referred to as CV in equation (3), the Error Seconds, referred to as ES in equation (3), the Severely Errored Seconds, referred to as SES in equation (3), the amount of showtime, or the amount of spontaneous re-synchronizations are monitored. When a signal is corrupted, a Code Violation is reported. ES is the number of seconds during which one or more non-remedial errors have occurred. SES is the number of times when a given number of consecutive Errored Seconds has been measured. $\Theta_s$, $\Theta_u$, $\Gamma_s$, and $\Gamma_u$ are stability thresholds to which the MTBE and the MTBR are compared to estimate if a line is stable, illustrated by relations (4), risky, illustrated by relation (5) or unstable, illustrated by relation (6). In equation (3), $\omega_1$, $\omega_2$, $\omega_3$ are weights which can take any suitable numerical value. The weights are used to attribute more importance in the calculation of the MTBE to the CV, the ES and/or the SES. If for example there are more Code Violations than there are Errored Seconds or Severely Errored Seconds, Code Violations will be associated with a heavier weight than ES and SES, so that the calculation of the MTBE is primarily determined by the amount of Code Violations. The MTBE and MTBR metrics are typically estimated on a daily basis. For example, EP2073446A1 describes a management device for use in an access network storing a DLM profile in association with each data connection. The parameters used to determine whether or not a change of profile should be made include the number of times a re-synchronization has occurred on a DSL connection within the past 24 hours and the number of errored seconds which have occurred within the past 24 hours. Other examples of such systems are described in the white paper of Alcatel-Lucent entitled "Dynamic Line Management for Digital Subscriber Lines" which states that close monitoring of each line over one entire week is necessary to more accurately diagnose the quality of the line. Another example of such a system is described in the scientific publication of Jochen Maes et al. of Alcatel-Lucent entitled "Autonomous Dynamic Optimization for Digital Subscriber Line Networks" wherein a near-optimal line configuration based on a limited set of data is determined and then fine-tuned as more data on the line becomes available. In all these systems, burst errors occurring during the night therefore have a similar effect on the estimation of the stability of a line than errors occurring during the day or even during the evening. In other words, if large amount of errors counted during a period of the day are averaged with very few errors counted during another period of the day, the calculated MTBE is significantly low while the end-user might not have perceived any reduced QoS. Such degraded classification in the context of DLM generally leads to for example larger latency or even bitrate reduction. This means that even though the QoS of the end-user was fine and did not require any limitations of for example the bitrate, the DLM results in a degradation of the experience of the end-used as well as a degradation of the performances of the line. With this calculation method of the two metrics, it is also possible to be faced with an opposite classification which also has dramatic effects on the QoS of the end-user. Indeed, a line can be classified as stable even though burst of errors occur during a period of the day. Because of the averaging during the calculation of the MTBE and the MTBR, the line is however classified as stable, even though the QoS of the end-used is significantly low, and the DLM does not provide action to increase the QoS. The estimation of the two metrics MTBE and MTBR is therefore calculated regardless of the impacts of the errors on the experience perceived by the end-user. The calculation is not accurate nor reliable enough to estimate if a line is stable or unstable.

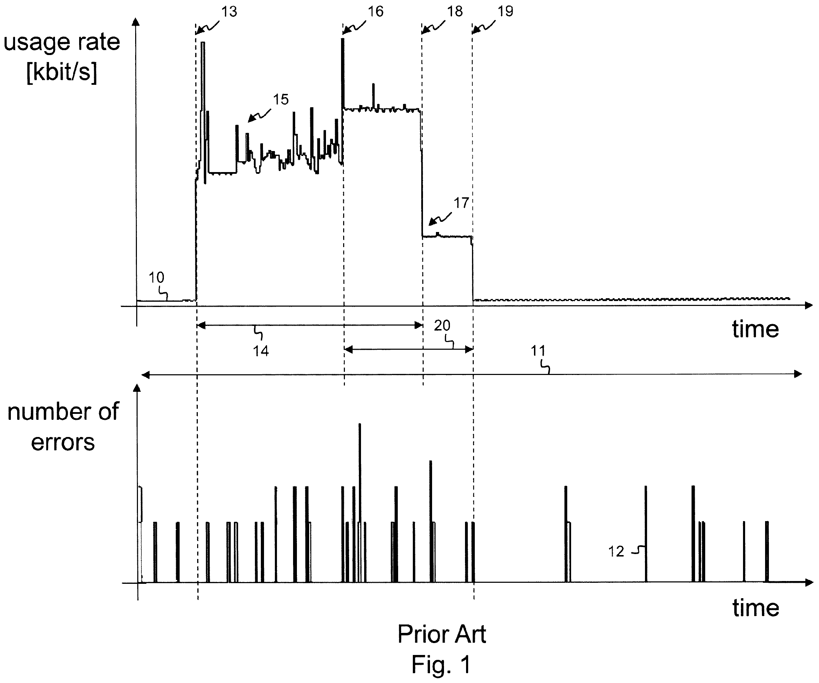

Fig. 1 schematically illustrates a view of a Digital Subscriber Line data usage rate 10 during for example a 24h period of time 11 with 15-min polling period and the presence of errors 12 during the same 24h period 11. At the time 13, an end-user starts using the Digital Subscriber Line and the usage rate 10 starts increasing. During the period 14, an IPTV-High Definition stream 15, also referred to as IPTV-HD stream 15, is launched. At the time 16, a second IPTV-Standard Definition stream 17, also referred to as IPTV-SD 17, is also launched. Then the first stream 15 is turned off at the time 18 and at the time 19, the second stream 17 is turned off as well. The second stream 17 then lasted over the period 20. The modem is always in showtime during this period 11. 39 errors are measured during 24-hours time 11, and according to the definition, the MTBE is evaluated to be equal to 2215s, or 36min. For example, if the threshold

$\Theta_s$ from the relation (4) is equal to 20min, the line will be classified as stable, even though the QoS of the end-user is very low. In other words, although the perceived QoS of the end-user was degraded during the period 11, the calculation of the MTBE does not reflect the degraded QoS. The impact of errors 12 on the QoS is therefore not evaluated and the stability assessment is not correctly estimated.

To tackle this issue, other solutions propose to either define black zones or to reject some "outlying periods" of the estimation of the QoS. However, limiting the estimation period to a given period of a day makes the classification blind with respect to all the other periods of the day. Bursts of errors could be present during the neglected time periods, during which errors could really impact the QoS of an end-user. This results in a misclassification of the line, which can be classified as stable while the real QoS of the end-user was in practice degraded. Additionally, as each end-user follows different habits, the calculation relying on rejected time periods is not reliable nor flexible as some end-users use the line during different time periods than other end-users.

## Summary of the Invention

It is an objective to disclose a device and the related method that overcome the above identified shortcomings of existing solutions. More particularly, it is an objective to disclose such a device and method for estimating the stability of a Digital Subscriber Line, where the estimation reliably, accurately and objectively reflects what an end-user of the Digital Subscriber Line perceives in terms of Quality of Service when using the Digital Subscriber Line. It is a further objective to disclose such a device to gain in service quality, to guarantee the highest performances of the Digital Subscriber Line and to improve the Quality of Service of an end-user of the Digital Subscriber Line, while reducing the costs and saving time. It is a further objective to disclose such a device that estimates the stability of a Digital Subscriber Line in a flexible, reliable and efficient manner in order to facilitate a suitable decision making during Dynamic Line Management.

According to embodiments of the present invention, the above defined objectives are realized according to the independent claims.

In accordance with the present invention, the device allows a more accurate estimation of the stability of a Digital Subscriber Line, which is further also referred to as line. The usage of the Digital Subscriber Line over time may be represented by the usage rate of the Digital Subscriber Line, i.e. the amount of data in bits transmitted over the Digital Subscriber Line per unit of time, and the usage rate is monitored over time. The usage rate is taken into account in the estimation of the stability of the Digital Subscriber Line. An automatic monitoring of the activity on the line allows to collect information about the usage rate of the line over time. A line may classified as stable, risky or unstable based on the result of the comparison of metrics characterizing the line to predetermined thresholds. The determination of the metrics by the Mean Time Between Issues unit relies on the monitored usage rate of the line. Indeed, the determination of the weighted Mean Time Between Issues, also referred to as Mean Time Between Issues or MTBi throughout this patent application, adaptively weights the importance of issues occurring inside and outside a period of time during which an end-user uses the line, i.e. a period of time when the usage rate is respectively higher than and lower than a predefined usage threshold. In other words, the Mean Time Between Issues unit adaptively weights the importance of issues depending on the respective impact of these issues on for example the required bandwidths, the Quality of Service, etc. This way, the Mean Time Between Issues more accurately reflects what an end-user of the Digital Subscriber Line really perceives in terms of Quality of Service when the end-user actually uses the Digital Subscriber Line. In other words, the estimation of the Quality of Service and the estimation of the stability of the Quality of Service reflect what the end-user really experiences during the usage of the Digital Subscriber Line with a significant improved accuracy.

The device according to the present invention facilitates the decision making in a troubleshooting process such as for example Dynamic Line Management. Indeed, if for instance the Digital Subscriber Line is accurately and rightfully classified as unstable, more reliable and more efficient actions can be taken faster in order to ensure the Digital Subscriber Line becomes and remains stable without unnecessarily risking jeopardizing the Quality of Service of the line. Several steps of the troubleshooting process, such as for instance reporting issued lines on which issues occur, identifying issued lines and quantifying the Quality of Service of issued lines, analysing the source of the issues, performing a diagnosis of the issued lines to determine the source of issues, and repairing the issued lines happen faster, more easily, more accurately and more reliably. For example, automatic diagnosis or management systems such as Network Access Control, Dynamic Line Management, etc, directly benefit from this improved estimation of the stability of the line and therefore result in more suitable actions. The satisfaction of the end-user of the line is greatly improved as troubleshooting actions match the experience of the end-user when the end-user actually uses the line.

The issues monitored by the Mean Time Between Issues unit are for example code-corrupted errors, re-synchronizations of a modem (for example Customer-Premises Equipment, also referred to as CPE), but also of a cabinet (for example Central Office equipment, also referred to as CO, or a Digital subscriber line access multiplexer, also referred to as DSLAM), code violations, error seconds, error-free throughput level drops, jitters, any suitable combination of the above, any other figure indicative for the stability of the Digital Subscriber Line, etc. The Mean Time Between Issues can therefore determine for instance a Mean Time Between Errors, also referred to as MTBE, which is an indication for the mean time a line has to wait before its PHY service is degraded by impacting errors, and/or a Mean Time Between Re-synchronizations, also referred to as MTBR, which is an indication of the mean time before which a modem or a cabinet spontaneously re-synchronizes because of the degraded quality of the transmission along the line, and/or a Mean Time Between Drops, and/or any other suitable metric useful to classify a line as stable, risky or unstable, and/or any combination of two or more of the above metrics. As a re-synchronization can arise for example from a modem or from a cabinet, for example generated because of an issue in the modem and/or in the cabinet, the Mean Time Between Re-synchronizations is an indication of the re-synchronizations occurring on the communication link. The Mean Time Between Drops, also referred to as MTBD, is a quantification of the impacting drops of bitrate or throughput or error-free throughput. In other words, The Mean Time Between Drops is an indication of the number of drops of useful bitrate with no proper errors at the PHY-layer but that however have consequences on the Quality of Service of the line.

A time window typically extends over a period of 24 hours. Over the time window, several streams can be activated by the end-user of the line. In other words, the usage rate from the Digital Subscriber Line increases with the number of streams. The Mean Time Between Issues unit determines a Mean Time Between Issues for each stream occurring during the time window. The weights determined from the usage rate and used to determine the weighted time window and the weights determined from the usage rate and used to determine the weighted number of issues are identical. Alternatively, the weights determined from the usage rate and used to determine the weighted time window and the weights determined from the usage rate and used to determine the weighted number of issues are equal to different numerical values in the range of zero to one. The usage monitor monitors the usage rate of the Digital Subscriber Line periodically, the polling period for example being equal to 15 minutes, to one hour, to a day, etc. The Mean Time Between Issues unit monitors issues occurring on the Digital Subscriber Line periodically, the polling period for example being equal to 15 minutes, to one hour, to a day, etc. This way, the calculation of the Mean Time Between Issues is made accurate and reliable, as the determination of the weights and therefore the determination of the Mean Time Between Issues is periodically updated.

For each stream, a weighted Mean Time Between Issues is calculated as follows:

$$MTBi = \frac{\sum_t^T weight[t].T_p}{\sum_t^T weight[t].issues[t]} \qquad (7)$$

where $T_p$ is the showtime during the polling period and where $T$ is the time window. The usage rate and issues are monitored during the time window. The numerator of the MTBi from equation (7) is the weighted time window determined from the time window with one or more weights determined in function of the usage rate. The denominator of the MTBi from equation (7) is the weighted number of issues determined from the issues during the time window with one or more weights determined in function of the usage rate.

According to the embodiment, the device further comprises a stability classification unit adapted to compare the weighted Mean Time Between Issues calculated with one or more stability thresholds to classify the Digital Subscriber Line as stable or unstable when the weighted Mean Time Between Issues is higher than or lower than said one or more stability thresholds.

The stability thresholds are the stability thresholds $\Theta_s$ and $\Theta_u$ from the relations (4), (5) and (6) related to a Mean Time Between Errors, $\Gamma_s$ and $\Gamma_u$ from the relations (4), (5) and (6) related to a Mean Time Between Re-synchronizations, any suitable combination of the stability thresholds from the relations (4), (5) and (6), any other suitable stability threshold related to a Mean Time Between Issues and used to classify a line as stable, risky, unstable, etc. The stability thresholds are determined from empirical rules. For example, when watching a video stream such as a movie, it is not acceptable to experience an issue every 2 seconds. A stability threshold is then for example set to 1 or 2 hours, or to any other value corresponding to the desire of an Internet and/or telecom service provider. Alternatively, the stability thresholds are determined from requirements for the Digital Subscriber Line, from characteristics of the Digital Subscriber Line, etc and depend for example on the Service Level Agreement, on a service quality paid for, etc. Thresholds can also be determined after studying the characteristics of a particular network or communication chain of an Internet and/or telecom service provider. In that case, quantitative measurements are performed in order to assess when the Quality of Service is degraded, and are used to set the values of the stability thresholds accordingly. This way, when two Mean Time Between Issues are higher than two first stability thresholds, the Digital Subscriber Line is classified as stable. When two Mean Time Between Issues are lower than two second stability thresholds, the Digital Subscriber Line is classified as unstable. The first stability thresholds and the second stability thresholds are equal to different numerical values. The second stability thresholds are a numerical value lower than the value of the first stability thresholds. The two first stability thresholds can be equal to the same value. Alternatively, the two first stability thresholds are equal to two different numerical values. The two second stability thresholds can be equal to the same value. Alternatively, the two second stability thresholds are equal to two different numerical values. When the Mean Time Between Issues is comprised between the first stability threshold and the second stability threshold, the Digital Subscriber Line is classified as risky. In other words, there exists a risk for the Digital Subscriber Line to later be classified as unstable if the number of issues occurring on the Digital Subscriber Line degrades the Quality of Service when the end-user of the Digital Subscriber Line is using the line and therefore results in a Mean Time Between Issues lower than the second stability threshold. For example, a Digital Subscriber Line can be classified as stable when the MTBE and the MTBR comply with the requirements of the relation (4). Alternatively, a Digital Subscriber Line can be classified as unstable when the MTBE and the MTBR comply with the requirements of the relation (6). Alternatively, a Digital Subscriber Line can be classified as risky when the MTBE and the MTBR comply with the requirements of the relation (5). This way, steps of troubleshooting can be implemented in a fast manner to for example identify the issues, analyse the source of the issues, repair the issued line, etc.

According to an optional embodiment, in said one or more weights, a weight associated with a high usage rate is a numerical value higher than a weight associated with a low usage rate.

This way, an issue occurring on the Digital Subscriber Line when an end-user is using the line, i.e. when the usage rate of the line is high, e.g. below a predefined usage threshold, is weighted by a numerical value higher than the numerical value of a weight used to weight an issue occurring on the Digital Subscriber Line when the end-user is not using the line, i.e. when the usage rate of the line is low, e.g. below a predefined usage threshold. In other words, issues occurring on the Digital Subscriber Line when the end-user is using the line are weighted with a higher value, i.e. are weighted with more importance than issues occurring on the line when the end-user is not using the line. This way, the Mean Time Between Issues more accurately reflects what the end-user of the Digital Subscriber Line really perceives in terms of Quality of Service when the end-user actually uses the Digital Subscriber Line. In other words, the estimation of the Quality of Service and the estimation of the stability of the Quality of Service reflect what the end-user really experiences during the usage of the Digital Subscriber Line with a significant improved accuracy. This facilitates the decision making in a troubleshooting process such as for example Dynamic Line Management and the satisfaction of the end-user of the line is greatly improved as actions match the experience of the end-user when the end-user uses the line.

According to an optional embodiment, the one or more weights are numerical values in the range of zero to one.

This way, the values of the weights used to weight issues occurring on the Digital Subscriber Line are normalized. The lowest value of one or more of the weights is equal to zero. The highest value of one or more of the weights is equal to one.

According to an optional embodiment, the one or more weights are equal to:

- zero when the usage rate is lower than a predefined usage threshold; and
- one when the usage rate is higher than a predefined usage threshold.

The predefined usage threshold determines a threshold for the usage rate above which a Digital Subscriber Line is considered as under use. When the usage rate is below the predefined usage threshold, the line is considered as not under use. This way, the Mean Time Between Issues unit adaptively weights the importance of issues depending on the respective impact of these issues on for example the required bandwidths, the Quality of Service, etc. This way, the Mean Time Between Issues adaptively weights the importance of issues depending on the fact that the issues occur inside or outside a period of time during which an end-user uses the line and during which the usage rate is respectively above or below the predefined usage threshold. This way, the Mean Time Between Issues more accurately reflects what an end-user of the Digital Subscriber Line really perceives in terms of Quality of Service when the end-user actually uses the Digital Subscriber Line. In other words, the estimation of the Quality of Service and the estimation of the stability of the Quality of Service reflect what the end-user really experiences during the usage of the Digital Subscriber Line with a significant improved accuracy.

According to an optional embodiment, the one or more weights are proportional to the usage rate.

This way, the higher the number of active streams on the Digital Subscriber Line is, the higher the usage rate of the line is. For example, the usage rate monitored when two streams are active along the line is higher than the usage rate monitored when only one stream is active along the line. The value of the weight used to weight the importance of issues occurring on the Digital Subscriber Line is proportional to the number of streams active along the line. For example, issues occurring on the line when two streams are active are weighted with a weight equal to a value equal to twice the value of a weight used to weight issues occurring on the line when only one stream is active. This way, the Mean Time Between Issues unit adaptively weights the importance of issues depending on the respective impact of these issues on for example the required bandwidths, the Quality of Service, etc. This way, the Mean Time Between Issues adaptively weights the importance of issues depending on the fact that the issues occur inside or outside a period of time during which an end-user uses the line, but the Mean Time Between Issues also adaptively weights the importance of issues depending on how many streams are active on the Digital Subscriber Line, i.e. on how heavily an end-user uses the line. In other words, the more an end-user uses the line, the more impact issues occurring on the line during this period of time have and the more importance the issues have in the calculation of the Mean Time Between Issues. The estimation of the Quality of Service and the estimation of the stability of the Quality of Service reflect what the end-user really experiences during the usage of the Digital Subscriber Line with a significant improved accuracy. The satisfaction of the end-user of the line is greatly improved as troubleshooting actions match the experience of the end-user when the end-user uses the line.

According to an optional embodiment:

- the device further comprises a Mean Time Between Re-synchronizations unit adapted to monitor re-synchronizations on the Digital Subscriber Line;

and the Mean Time Between Re-synchronizations unit is further adapted to determine:

- a weighted duration between two consecutive re-synchronizations from the re-synchronizations during the at least one time window with one or more weights determined in function of the usage rate; and
- a weighted Mean Time Between Re-synchronizations by dividing the at least one weighted time window by the weighted duration between two consecutive re-synchronizations.

This way, re-synchronizations arising from a modem or a cabinet are taken into account in the estimation of the stability of a Digital Subscriber Line. The re-synchronization of the communication link is then taken into account in the estimation of the stability of the line. The weighted Mean Time Between Re-synchronizations, also referred to as Mean Time Between Re-synchronizations or MTBR throughout this patent application, is compared to stability thresholds. When a Mean Time Between Issues, different from the Mean Time Between Re-synchronizations, and the Mean Time Between Re-synchronizations comply with the requirements of relation (4), the Digital Subscriber Line is classified as stable. When the Mean Time Between Issues and the Mean Time Between Re-synchronizations comply with the requirements of relation (6), the Digital Subscriber Line is classified as unstable. When the Mean Time Between Issues and the Mean Time Between Re-synchronizations comply with the requirements of relation (5), the Digital Subscriber Line is classified as risky. This way, the estimation of the stability of the Digital Subscriber Line is made more accurate and reliable as the estimation is based on several figures, e.g. the MTBi and the MTBR, and therefore takes more measured parameters and characteristics of the line and the usage rate into account.

For each stream, a weighted Mean Time Between Re-synchronization is calculated as follows:

$$MTBR = \frac{\sum_t^T weight[t].T_p}{\sum_t^T weight[t].synchronizations[t]} \qquad (8)$$

where $T_p$ is the showtime during the polling period and where $T$ is the time window. The usage rate and re-synchronizations are monitored during the time window. The numerator of the MTBR from equation (8) is the weighted time window determined from the time window with one or more weights determined in function of the usage rate. The denominator of the MTBR from equation (8) is the weighted duration between two consecutive re-synchronizations, referred to as synchronizations[t], determined from the re-synchronizations during the time window with one or more weights determined in function of the usage rate.

According to an optional embodiment:

- the usage monitor is further adapted to normalize the usage rate over the at least one time window, thereby generating a normalized usage rate;
- the Mean Time Between Issues unit is further adapted to determine:

  - a normalized weighted number of issues from the issues monitored during the at least one time window with one or more weights determined in function of the normalized usage rate; and
  - a normalized weighted Mean Time Between Issues by dividing the weighted time window by the normalized weighted number of issues.

During the period of time during which an end-user uses a Digital Subscriber Line, there exist periods of time where the need of bitrate is higher and a need for a good Quality of Service is critical. It is for example the case when several streams are active together along the Digital Subscriber Line. Issues occurring during the active streams could lead to a propagation of issues over the different services and result in a drastic degradation of the overall Quality of Service for the end-user. A normalization of the usage rate is then performed in order to use the normalized usage rate as weights in the calculation of the Mean Time Between Issues, for example in the calculation of a Mean Time Between Errors. This way, the estimation of the Quality of Service is self-adaptive to the usage rate of the Digital Subscriber Line and to the service the end-user is really experiencing. The issues are weighted so as to adaptively weight their importance according to their respective impact on the required bandwidth and/or services.

The normalized usage rate is determined according to equation (9):

$$normalized\ usage\ rate[t] = \frac{usage\ rate\ [t]}{\sum_{t}^{T} usage\ rate\ [t]} \qquad (9)$$

where $T$ is the time window, and usage rate is the usage rate monitored during the time window.

For each stream, a normalized weighted Mean Time Between Issues, referred to as nMBTi in equation (10) is calculated as follows:

$$nMTBi = \frac{\sum_{t}^{T} weight[t].T_p}{\sum_{t}^{T} normalized\ usage\ rate[t].\ issues[t]} \qquad (10)$$

where $T_p$ is the showtime during the polling period and where $T$ is the time window. The usage rate and issues are monitored during the time window. The numerator of the nMTBi from equation (10) is the weighted time window determined from the time window with one or more weights determined in function of the usage rate. The denominator of the nMTBi from equation (10) is the normalized weighted number of issues determined from the issues during the time window with one or more weights determined in function of the normalized usage rate.

According to an optional embodiment:

- the usage monitor is further adapted to normalize the usage rate over the at least one time window, thereby generating a normalized usage rate;
- the Mean Time Between Re-synchronization unit is further adapted to determine:

  - a normalized weighted duration between two consecutive re-synchronizations from the re-synchronizations during the at least one time window with one or more weights determined in function of the normalized usage rate; and
  - a normalized weighted Mean Time Between Re-synchronizations by dividing the weighted time window by the normalized weighted duration between two consecutive re-synchronizations.

During the period of time during which an end-user uses a Digital Subscriber Line, there exist periods of time when the need of bitrate is higher and a need for a good Quality of Service is critical. It is for example the case when several streams are active together along the Digital Subscriber Line. Re-synchronizations occurring during the active streams could lead to the propagation of issues over the different services and drastically degrade the overall Quality of Service for the end-user. A normalization of the usage rate is then performed in order to use the normalized usage rate as weights in the calculation of the Mean Time Between Re-synchronizations. This way, the estimation of the Quality of Service is self-adaptive to the usage rate of the Digital Subscriber Line and to the service the end-user is really experiencing. The re-synchronizations are weighted so as to adaptively weight their importance according to their respective impact on the required bandwidth and/or services.

The normalized usage rate is determined according to equation (11):

$$normalized\ usage\ rate[t] = \frac{usage\ rate\ [t]}{\sum_{t}^{T} usage\ rate\ [t]} \qquad (11)$$

where $T$ is the time window, and usage rate is the usage rate monitored during the time window.

For each stream, a normalized weighted Mean Time Between Re-synchronization, referred to as nMBTR in equation (12) is calculated as follows:

$$nMTBR = \frac{\sum_{t}^{T} weight[t].T_p}{\sum_{t}^{T} normalized\ usage\ rate[t].\ synchronizations[t]} \qquad (12)$$

where $T_p$ is the showtime during the polling period and where $T$ is the time window. The usage rate and issues are monitored during the time window. The numerator of the nMTBR from equation (12) is the weighted time window determined from the time window with one or more weights determined in function of the usage rate. The denominator of the nMTBR from equation (12) is the normalized weighted duration between two consecutive re-synchronizations, referred to as *synchronizations*[*t*], determined from the re-synchronizations during the time window with one or more weights determined in function of the normalized usage rate.

According to an optional embodiment, the Mean Time Between Issues unit is adapted to skip the determination of the weighted time window and the corresponding weighted number of issues when the usage rate is below a predefined usage rate threshold during one or more corresponding time windows.

This way, the device is able to identify one or more time windows during which the usage rate is always lower than a predefined usage rate threshold. This is an indication that an end-user of the Digital Subscriber Line is not using the line. The predefined usage rate threshold may be substantially equal to or equal to the predefined usage threshold. Skipping the determination of the weighted time window and the corresponding weighted number of issues is therefore relevant as issues occurring during these one or more time windows do not have an impact on the perceived experience of the end-user of the line. The action of skipping the calculation saves computational power, and therefore reduces the costs associated with the implementation of the device.

According to embodiments of the present invention, there is provided a method according to claim 10.

In accordance with the present invention, the method allows a more accurate estimation of the stability of a Digital Subscriber Line, which is also referred to as line. The usage of the Digital Subscriber Line over time may be represented by the usage rate of the Digital Subscriber Line, i.e. the amount of data in bits transmitted over the Digital Subscriber Line per unit of time, and the usage rate is monitored over time. The usage rate is taken into account in the estimation of the stability of the Digital Subscriber Line. An automatic monitoring of the activity on the line allows to collect information about the usage rate of the line over time. A line may be classified as stable, risky or unstable based on the result of the comparison of metrics characterizing the line to predetermined thresholds. The determination of the metrics relies on the monitoring of the usage rate of the line Indeed, the determination of the Mean Time Between Issues also referred to as Mean Time Between Issues or MTBi throughout this patent application, adaptively weights the importance of issues occurring inside and outside a period of time during which an end-user uses the line, i.e. a period of time when the usage rate is respectively higher than and lower than a predefined usage threshold. In other words, the Mean Time Between Issues unit adaptively weights the importance of issues depending on the respective impact of these issues on for example the required bandwidths, the Quality of Service, etc. This way, issues are adaptively weighted depending on the respective impact of these issues on for example the required bandwidths, the Quality of Service, etc. This way, the Mean Time Between Issues more accurately reflects what an end-user of the Digital Subscriber Line really perceives in terms of Quality of Service when the end-user actually uses the Digital Subscriber Line. In other words, the estimation of the Quality of Service and the estimation of the stability of the Quality of Service reflect what the end-user really experiences during the usage of the Digital Subscriber Line with a significant improved accuracy.

The device according to the present invention facilitates the decision making in a troubleshooting process such as for example Dynamic Line Management. Indeed, if for instance the Digital Subscriber Line is accurately and rightfully classified as unstable, more reliable and more efficient actions can be taken faster in order to ensure the Digital Subscriber Line becomes and remains stable without unnecessarily risking jeopardizing the Quality of Service of the line. Several steps of the troubleshooting process, such as for instance reporting issued lines on which issues occur, identifying issued lines and quantifying the Quality of Service of issued lines, analysing the source of the issues, performing a diagnosis of the issued lines to determine the source of issues, and repairing the issued lines happen faster, more easily, more accurately and more reliably. For example, automatic diagnosis or management systems such as Network Access Control, Dynamic Line Management, etc, directly benefit from this improved estimation of the stability of the line and therefore result in more suitable actions. The satisfaction of the end-user of the line is greatly improved as troubleshooting actions match the experience of the end-user when the end-user actually uses the line.

The issues monitored by the Mean Time Between Issues unit are for example code-corrupted errors, re-synchronizations of a modem (for example Customer-Premises Equipment, also referred to as CPE), but also of a cabinet (for example Central Office equipment, also referred to as CO, or a Digital subscriber line access multiplexer, also referred to as DSLAM), code violations, error seconds, error-free throughput level drops, jitters, any suitable combination of the above, any other figure indicative for the stability of the Digital Subscriber Line, etc. The Mean Time Between Issues can therefore determine for instance a Mean Time Between Errors, also referred to as MTBE, which is an indication for the mean time a line has to wait before its PHY service is degraded by impacting errors, and/or a Mean Time Between Re-synchronizations, also referred to as MTBR, which is an indication of the mean time before which a modem or a cabinet spontaneously re-synchronizes because of the degraded quality of the transmission along the line, and/or a Mean Time Between Drops, and/or any other suitable metric useful to classify a line as stable, risky or unstable, and/or any combination of two or more of the above metrics. As a re-synchronization can arise for example from a modem or from a cabinet, for example generated because of an issue in the modem and/or in the cabinet, the Mean Time Between Re-synchronizations is an indication of the re-synchronizations occurring on the communication link. The Mean Time Between Drops, also referred to as MTBD, is a quantification of the impacting drops of bitrate or throughput or error-free throughput. In other words, The Mean Time Between Drops is an indication of the number of drops of useful bitrate with no proper errors at the PHY-layer but that however have consequences on the Quality of Service of the line.

A time window typically extends over a period of 24 hours. Over the time window, several streams can be activated by the end-user of the line. In other words, the usage rate from the Digital Subscriber Line increases with the number of streams. Each stream of the time window is characterized by a Mean Time Between Issues. The weights determined from the usage rate and used to determine the weighted time window and the weights determined from the usage rate and used to determine the weighted number of issues are identical. Alternatively, the weights determined from the usage rate and used to determine the weighted time window and the weights determined from the usage rate and used to determine the weighted number of issues are equal to different numerical values in the range of zero to one. The usage rate of the Digital Subscriber Line is monitored periodically, the polling period for example being equal to 15 minutes, to one hour, to a day, etc. Issues occurring on the Digital Subscriber Line are monitored periodically, the polling period for example being equal to 15 minutes, to one hour, to a day, etc. This way, the calculation of the Mean Time Between Issues is made accurate and reliable, as the determination of the weights and therefore the determination of the Mean Time Between Issues is periodically updated.

The current invention in addition also relates to a computer program comprising software code adapted to perform the method according to the present invention.

The invention further relates to a computer readable storage medium comprising the computer program according to the present invention.

**Brief Description of the Drawings**

Fig. 1 schematically illustrates an embodiment of a prior art monitoring for estimating the stability of a Digital Subscriber Line.

Fig. 2 schematically illustrates an embodiment of a device for estimating the stability of a Digital Subscriber Line.

Fig. 3 schematically illustrates an embodiment of a monitoring of a usage rate and of issues occurring on a Digital Subscriber Line.

Fig. 4 schematically illustrates an embodiment of a monitoring of a usage rate and of issues occurring on a Digital Subscriber Line.

Fig. 5 schematically illustrates a suitable computing system for hosting the device of Figure 2.

**Detailed Description of Embodiment(s)**

According to an embodiment shown in Fig. 1, a usage rate 10 of a Digital Subscriber Line is monitored during a 24 hour time window 11. Over this time window 11, the usage rate is monitored every 15 minutes. During the same time window 11 of 24 hours, errors 12 are monitored. At the time 13, an end-user starts using the Digital Subscriber Line and the usage rate 10 increases. During the period 14, an IPTV-High Definition stream 15, also referred to as IPTV-HD stream 15, is active. At the time 16, a second IPTV-Standard Definition stream 17, also referred to as IPTV-SD 17, is also active. The first stream 15 is turned off at the time 18 and at the time 19, the second stream 17 is turned off as well. The second stream 17 was active during the period 20. The CPE is always in showtime during this time window 11. In total, 39 errors are measured during the time window 11, and according to the definition, the MTBE is evaluated to be equal to 2215s, or 36min. For example, if the threshold $\Theta_s$ from the relation (4) is equal to 20min, the line is classified as stable, even though the QoS of the end-user is very low. In other words, although the perceived QoS of the end-user was degraded during the time window 11, the calculation of the MTBE does not reflect the degraded QoS. The impact of errors 12 on the QoS is therefore not evaluated and the stability assessment is not correctly estimated.

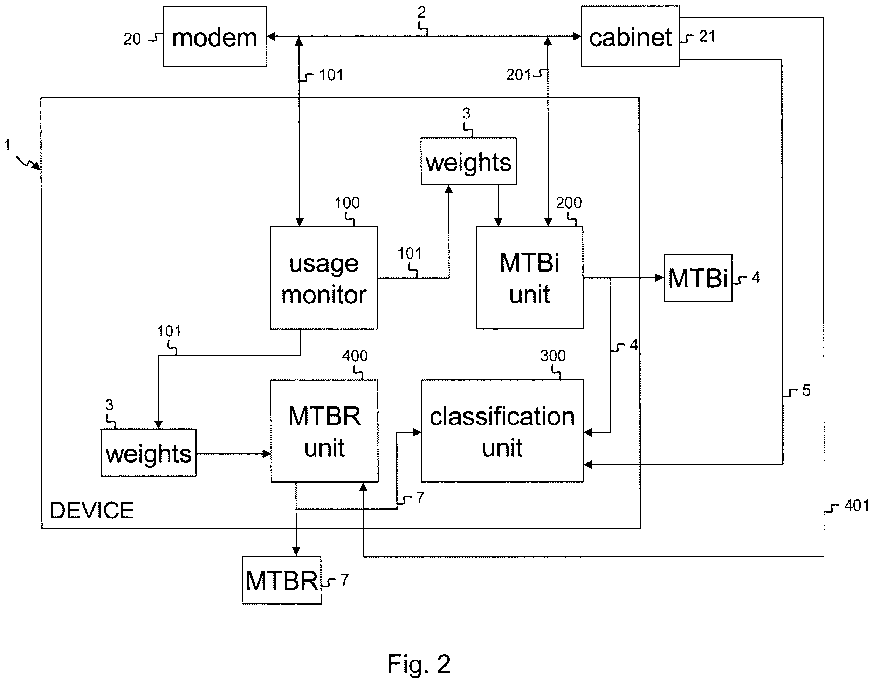

According to an embodiment shown in Fig. 2, a device 1 comprises a usage monitor 100 and a Mean Time Between Issues unit 200, labelled MTBi unit. A Digital Subscriber Line 2 is positioned between a modem 20, for example a Customer-Premises Equipment, and a cabinet 21, which can for instance be a central office, a digital subscriber line access multiplexer, etc. The device 1 optionally comprises a stability classification unit 300 and a Mean Time Between Re-synchronization unit 400. The usage monitor 100 monitors a usage rate 101 of a Digital Subscriber Line 2 by a modem 20. The Mean Time Between Issues unit 200 monitors issues 201 occurring on the Digital Subscriber Line 2 during the time window. Additionally, the Mean Time Between Issues unit 200 of the device 1 determines a weighted time window from the time window with one or more weights 3 determined in function of the usage rate 101. According to an alternative embodiment, the usage rate 101 is retrieved from the cabinet 21, for example from a management information base or another database of a central office equipment or of a digital line access multiplexer. Additionally, the Mean Time Between Issues unit 200 determines a weighted number of issues from the issues 201 with one or more weights 3 determined in function of the usage rate 101. According to an alternative embodiment, the issues 201 are retrieved from the cabinet 21, for example from a management information base or another database of a central office equipment or of a digital line access multiplexer. Additionally, the Mean Time Between Issues unit 200 determines a Mean Time Between Issues 4 by dividing the weighted time window by the weighted number of issues. Optionally, a stability classification unit 300 compares the Mean Time Between Issues 4 to stability thresholds 5 in order to classify the Digital Subscriber Line 2 as stable or unstable. Optionally, the device 1 further comprises a Mean Time Between Re-synchronizations unit 400. The Mean Time Between Re-synchronizations unit 400 monitors re-synchronizations 401 arising from the modem 20 or from the cabinet 21 during the time window. The parameters of the re-synchronizations 401 are for example retrieved from a database located in the cabinet 21 such as for example a management information base, also referred to as MIB, of a digital subscriber line access multiplexer. According to an alternative embodiment, the Mean Time Between Re-synchronizations unit 400 monitors the re-synchronizations 401 of arising from the modem 20 during the time window. Additionally, the Mean Time Between Re-synchronizations unit 400 determines a weighted duration between two re-synchronizations from the synchronizations 401 during the time window with one or more weights determined in function of the usage rate 101. Additionally, the Mean Time Between Re-synchronizations unit 400 determines a weighted Mean Time Between Re-synchronizations 7 by dividing the weighted time window by the weighted duration between two re-synchronizations. The cabinet 21 comprises the stability thresholds 5. Alternatively, the modem 20 comprises the stability thresholds 5. Alternatively, the stability thresholds are comprised in the device 1.

The cabinet 21 of Fig. 2 can comprise the device 1 of Fig. 2. Alternatively, the device 1 of Fig. 2 can be comprised in the modem 20 of Fig. 2. Alternatively, the device 1 can be implemented independently from the cabinet 21 and the modem 20. The determination of the weights 3 of Fig. 2 is performed by the device 1 of Fig. 2. Alternatively, the determination of the weights 3 of Fig. 2 can be performed by a unit comprised in the cabinet 21, the modem 20, or any other suitable unit.

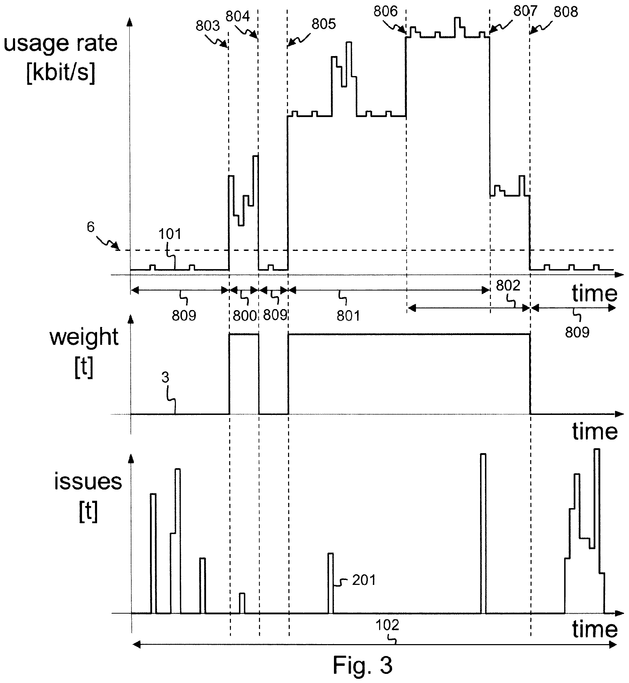

According to an embodiment shown in Fig. 3, the usage rate 101 of a Digital Subscriber Line is monitored during a time window 102. The usage rate 101 is the amount of data in bits transmitted over the Digital Subscriber Line per unit of time. Over the time periods 809, the usage rate 201 is below a predefined usage threshold 6. At the time 803, a first stream becomes active on the Digital Subscriber Line. At the time 804, the first stream stops. The first stream therefore lasts over the period 800. The usage rate 101 is above a predefined usage threshold 6 during the period 800. At the time 805, a second stream becomes active on the Digital Subscriber Line. At the time 806, a third stream becomes active on the Digital Subscriber Line. At the time 807, the second stream stops. At the time 808, the third stream stops. The second stream therefore lasts over the period 801. The third stream therefore lasts over the period 802. The usage rate 101 is above a predefined usage threshold 6 during the periods 800;801;802. As visible in Fig. 3, issues 201 are monitored during the time window 102. Weights 3 are determined in function of the usage rate 101. Weights 3 associated with issues 201 occurring on the Digital Subscriber Line during periods during which the usage rate 101 is above the predefined usage threshold 6 are equal to numerical values higher than weights 3 associated with issues 201 occurring on the Digital Subscriber Line during periods during which the usage rate 101 is below the predefined usage threshold 6. As visible in Fig. 3, weights 3 during the periods 800;801;802 are equal, and equal to a numerical value higher than the weights 3 during the periods 809. Alternatively, the weights 3 during the period 800 are equal to a numerical value different from the weights 3 during the period 801 and/or the period 802. Issues 201 occurring on the Digital Subscriber Line during the periods 800;801;802 have a larger importance in the determination of the Mean Time Between Issues than the issues 201 occurring on the Digital Subscriber Line during the periods 809, as the first issues 201 are weighted with a larger numerical value.

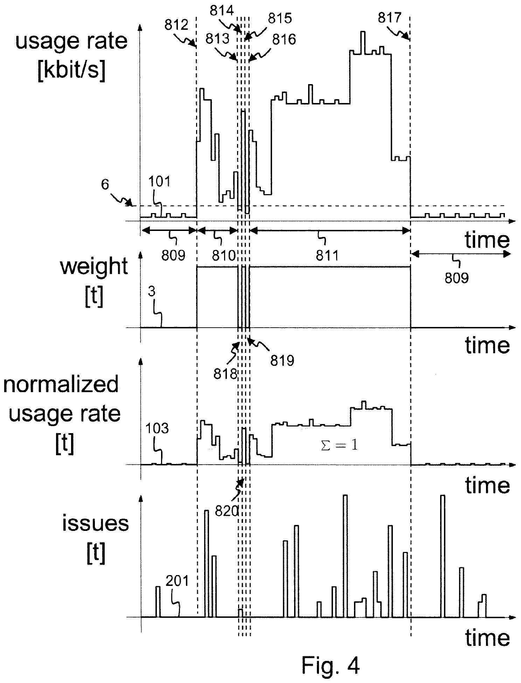

According to an embodiment shown in Fig. 4, the usage rate 101 of a Digital Subscriber Line is monitored during a time window 102. The usage rate 101 is the amount of data in bits transmitted over the Digital Subscriber Line per unit of time. Over the time periods 809, the usage rate 101 is below a predefined usage threshold 6. At the time 812, a first stream becomes active on the Digital Subscriber Line. The usage rate 101 is above a predefined usage threshold 6 during the period 810. At the time 813, the first stream is still active on the Digital Subscriber Line, but the usage rate 101 drops below the predefined usage threshold 6. Between the times 813 and 814, i.e. during the period 818, the usage rate 101 is below the predefined usage threshold 6. Between the times 814 and 815, i.e. during the period 820, the usage rate 101 exceeds the predefined usage threshold 6. Between the times 815 and 816, i.e. during the period 819, the usage rate 101 drops below the predefined usage threshold 6. From the time 816, the usage rate 101 exceeds the predefined usage threshold 6 until the time 817, i.e. over the period 811. After the time 817, the usage rate 101 is below the predefined usage threshold 6. As visible in Fig. 4, issues 201 are monitored during the time window 102. Weights 3 are determined in function of the usage rate 101. Weights 3 associated with issues 201 occurring on the Digital Subscriber Line during periods during which the usage rate 101 is above the predefined usage threshold 6 are equal to numerical values higher than weights 3 associated with issues 201 occurring on the Digital Subscriber Line during periods during which the usage rate 101 is below the predefined usage threshold 6. As visible in Fig. 4, weights 3 during the periods 810;820;811 are equal, and equal to a numerical value higher than the weights 3 during the periods 809;818;819. Alternatively, the weights 3 during the period 810 are equal to a numerical value different from the weights 3 during the period 820 and/or the period 811. Issues 201 occurring on the Digital Subscriber Line during the periods 810;820;811 have a larger importance in the determination of the Mean Time Between Issues than the issues 201 occurring on the Digital Subscriber Line during the periods 809;818;819, as the first issues 201 are weighted with a larger numerical value. As visible on Fig. 4, a normalized usage rate 103 is determined from a normalization of the usage rate 101 over the time window 102.

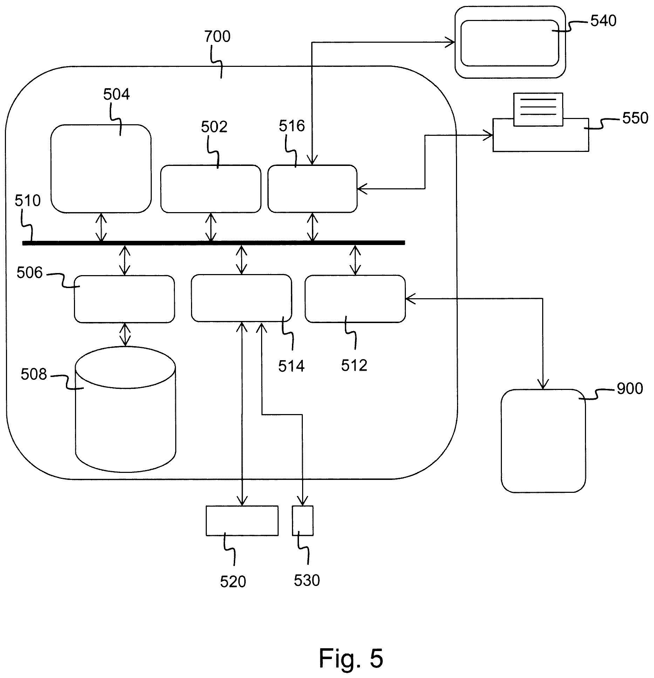

Fig. 5 shows a suitable computing system 700 for hosting the device 1 of Fig. 2. Computing system 700 may in general be formed as a suitable general purpose computer and comprise a bus 510, a processor 502, a local memory 504, one or more optional input interfaces 514, one or more optional output interfaces 516 a communication interface 512, a storage element interface 506 and one or more storage elements 508. Bus 510 may comprise one or more conductors that permit communication among the components of the computing system. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 504. Input interface 514 may comprise one or more conventional mechanisms that permit an operator to input information to the computing device 800, such as a keyboard 520, a mouse 530, a pen, voice recognition and/or biometric mechanisms, etc. Output interface 516 may comprise one or more conventional mechanisms that output information to the operator, such as a display 540, a printer 550, a speaker, etc. Communication interface 512 may comprise any transceiver-like mechanism such as for example two 1 Gb Ethernet interfaces that enables computing system 800 to communicate with other devices and/or systems, for example mechanisms for communicating with one or more other computing systems 900. The communication interface 512 of computing system 700 may be connected to such another computing system by means of a local area network (LAN) or a wide area network (WAN, such as for example the internet, in which case the other computing system 580 may for example comprise a suitable web server. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example 1TB SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 700 described above can also run as a Virtual Machine above the physical hardware.

The device 1 of Fig. 2 can be implemented as programming instructions stored in local memory 504 of the computing system 700 for execution by its processor 502. Alternatively device 1 of Fig. 2 could be stored on the storage element 508 or be accessible from another computing system 900 through the communication interface 512.

**Claims**

1. A device (1) for estimating the stability of a Digital Subscriber Line (2), said device (1) comprising:

   - a Mean Time Between Issues unit (200) adapted to monitor issues (201) occurring on said Digital Subscriber Line (2) during at least one time window (102);
   - said device (1) further comprises a usage monitor (100) adapted to monitor a usage rate (101) of said Digital Subscriber Line (2) during said at least one time window (102);
   - said Mean Time Between Issues unit (200) is further adapted to:

      - determine a weighted time window (202) from said at least one time window (102) with one or more weights determined in function of said usage rate (101);
      - determine a weighted number of issues (203) from said issues (201) monitored during said at least one time window (102) with one or more weights determined in function of said usage rate (101);
      - determine a weighted Mean Time Between Issues (4) by dividing said weighted time window (202) by said weighted number of issues (203); and

   wherein said device (1) further comprises a stability classification unit (300) adapted to compare said weighted Mean Time Between Issues calculated (4) with one or more stability thresholds (5) to classify said Digital Subscriber Line (2) as stable or unstable when said weighted Mean Time Between Issues (4) is higher than or lower than said one or more stability thresholds (5).

2. A device (1) according to claim 1, wherein, in said one or more weights, a weight associated with a high usage rate (101) is a numerical value higher than a weight associated with a low usage rate (101).

3. A device (1) according to claim 1, wherein said one or more weights are numerical values in the range of zero to one.

4. A device (1) according to claim 1, wherein said one or more weights are equal to:

   - zero when said usage rate (101) is lower than a predefined usage threshold (6); and
   - one when said usage rate (101) is higher than a predefined usage threshold (6).

5. A device (1) according to claim 1, wherein said one or more weights are proportional to said usage rate (101).

6. A device (1) according to claim 1, wherein:

   - said device (1) further comprises a Mean Time Between Re-synchronization unit (400) adapted to monitor re-synchronizations (401) on said Digital Subscriber Line (2);

   and wherein said Mean Time Between Re-synchronizations unit (400) is further adapted to determine:

   - a weighted duration between two consecutive re-synchronizations (402) from said re-synchronizations (401) during said at least one time window (102) with one or more weights determined in function of said usage rate (101); and
   - a weighted Mean Time Between Re-synchronizations (7) by dividing said at least one weighted time window (202) by said weighted duration between two consecutive re-synchronizations (402).

7. A device (1) according to claim 1, wherein:

   - said usage monitor (100) is further adapted to normalize said usage rate (101) over said at least one time window (102), thereby generating a normalized usage rate (103);
   - said Mean Time Between Issues unit (200) is further adapted to determine:

     - a normalized weighted number of issues (204) from said issues (201) monitored during said at least one time window (102) with one or more weights determined in function of said normalized usage rate (103); and
     - a normalized weighted Mean Time Between Issues (8) by dividing said weighted time window (202) by said normalized weighted number of issues (204).

8. A device (1) according to claim 6, wherein:

   - said usage monitor (100) is further adapted to normalize said usage rate (101) over said at least one time window (102), thereby generating a normalized usage rate (103);
   - said Mean Time Between Re-synchronization unit (400) is further adapted to determine:

     - a normalized weighted duration between two consecutive re-synchronizations (403) from said re-synchronizations (402) during said at least one time window (102) with one or more weights determined in function of said normalized usage rate (101);
     - a normalized weighted Mean Time Between Re-synchronizations (9) by dividing said weighted time window (102) by said normalized weighted duration between two consecutive re-synchronizations (403).

9. A device (1) according to claim 1, wherein said Mean Time Between Issues unit (200) is adapted to skip said determination of said weighted time window (202) and said corresponding weighted number of issues (203) when said usage rate (101) is below a predefined usage rate threshold (10) during one or more corresponding time windows (102).

10. A method for estimating the stability of a Digital Subscriber Line (2), said method comprising the step of:

   - monitoring issues (201) occurring on said Digital Subscriber Line (2) during at least one time window (102);

said method further comprises the steps of:

- monitoring a usage rate (101) of said Digital Subscriber Line (2) during said at least one time window (102);
- determining a weighted time window (202) from said at least one time window (102) with one or more weights determined in function of said usage rate (101);
- determining a weighted number of issues (203) from said issues (201) monitored during said at least one time window (102) with one or more weights determined in function of said usage rate (101);
- determining a weighted Mean Time Between Issues (4) by dividing said weighted time window (202) by said weighted number of issues (203); and
- comparing said weighted Mean Time Between Issues calculated (4) with one or more stability thresholds (5) to classify said Digital Subscriber Line (2) as stable or unstable when said weighted Mean Time Between Issues (4) is higher than or lower than said one or more stability thresholds (5).

**11.** A computer program comprising software code adapted to perform the method according to claim 10.

**12.** A computer readable storage medium comprising computer-executable instructions which, when executed by a computing system, perform a method according to claim 10.

**Patentansprüche**

**1.** Vorrichtung (1) zum Schätzen der Stabilität eines digitalen Teilnehmeranschlusses (2), wobei die besagte Vorrichtung (1) Folgendes umfasst:

- eine Einheit für die mittlere Betriebsdauer zwischen Problemen (200), die angepasst ist zum Überwachen von Problemen (201), die an dem besagten digitalen Teilnehmeranschluss (2) während mindestens eines Zeitfensters (102) auftreten;
- wobei die besagte Vorrichtung (1) weiterhin ein Nutzungsüberwachungsgerät (100) umfasst, das angepasst ist zum Überwachen einer Nutzungsrate (101) des besagten digitalen Teilnehmeranschlusses (2) während des besagten mindestens einen Zeitfensters (102);
- wobei die besagte Einheit für die mittlere Betriebsdauer zwischen Problemen (200) weiterhin angepasst ist zum:

  - Bestimmen eines gewichteten Zeitfensters (202) aus dem besagten mindestens einen Zeitfenster (102) mit einer oder mehreren Gewichtungen, die in Abhängigkeit von der besagten Nutzungsrate (101) bestimmt werden;
  - Bestimmen einer gewichteten Anzahl von Problemen (203) aus den besagten Problemen (201), die während des besagten mindestens einen Zeitfensters (102) überwacht werden, mit einer oder mehreren Gewichtungen, die in Abhängigkeit von der besagten Nutzungsrate (101) bestimmt werden;
  - Bestimmen einer gewichteten mittleren Betriebsdauer zwischen Problemen (4) durch Dividieren des besagten gewichteten Zeitfensters (202) durch die besagte gewichtete Anzahl von Problemen (203); und

wobei die besagte Vorrichtung (1) weiterhin eine Stabilitätsklassifizierungseinheit (300) umfasst, die angepasst ist zum Vergleichen der besagten berechneten gewichteten mittleren Betriebsdauer zwischen Problemen (4) mit einem oder mehreren Stabilitätsgrenzwerten (5), um den besagten digitalen Teilnehmeranschluss (2) als stabil oder instabil zu klassifizieren, wenn die besagte gewichtete mittlere Betriebsdauer zwischen Problemen (4) höher oder geringer ist als der besagte eine oder die mehreren Stabilitätsgrenzwerte (5).

**2.** Vorrichtung (1) nach Anspruch 1, wobei in der besagten einen oder den mehreren Gewichtungen eine Gewichtung in Verbindung mit einer hohen Nutzungsrate (101) ein Zahlenwert ist, der höher ist als eine Gewichtung in Verbindung mit einer geringen Nutzungsrate (101).

**3.** Vorrichtung (1) nach Anspruch 1, wobei die besagte eine oder mehreren Gewichtungen Zahlenwerte im Bereich von null bis eins sind.

**4.** Vorrichtung (1) nach Anspruch 1, wobei die besagte eine oder mehreren Gewichtungen gleich:

- null sind, wenn die besagte Nutzungsrate (101) geringer ist als ein vorausdefinierter Nutzungsgrenzwert (6); und
- eins sind, wenn die besagte Nutzungsrate (101) höher ist als ein vorausdefinierter Nutzungsgrenzwert (6).

**5.** Vorrichtung (1) nach Anspruch 1, wobei die besagte eine oder mehreren Gewichtungen proportional zu der besagten Nutzungsrate (101) sind.

**6.** Vorrichtung (1) nach Anspruch 1, wobei:

- die besagte Vorrichtung (1) weiterhin eine Einheit für die mittlere Betriebsdauer zwischen Neusynchronisationen (400) umfasst, die angepasst ist zum Überwachen von Neusynchronisationen (401) an dem besagten digitalen Teilnehmeranschluss (2);

und wobei die besagte Einheit für die mittlere Betriebsdauer zwischen Neusynchronisationen (400) weiterhin angepasst ist zum Bestimmen:

- einer gewichteten Dauer zwischen zwei aufeinander folgenden Neusynchronisationen (402) aus den besagten Neusynchronisationen (401) während des besagten mindestens einen Zeitfensters (102) mit einer oder mehreren Gewichtungen, die in Abhängigkeit von der besagten Nutzungsrate (101) bestimmt werden; und
- einer gewichteten mittleren Betriebsdauer zwischen Neusynchronisationen (7) durch Dividieren des besagten gewichteten Zeitfensters (202) durch die besagte gewichtete Dauer zwischen zwei aufeinanderfolgenden Neusynchronisationen (402).

**7.** Vorrichtung (1) nach Anspruch 1, wobei:

- das besagte Nutzungsüberwachungsgerät (100) weiterhin angepasst ist zum Normieren der besagten Nutzungsrate (101) über das besagte mindestens eine Zeitfenster (102), wodurch eine normierte Nutzungsrate (103) erzeugt wird;
- die besagte Einheit für die mittlere Betriebsdauer zwischen Problemen (200) weiterhin angepasst ist zum Bestimmen:

- einer normierten gewichteten Anzahl von Problemen (204) aus den besagten Problemen (201), die während des besagten mindestens einen Zeitfensters (102) überwacht werden, mit einer oder mehreren Gewichtungen, die in Abhängigkeit von der besagten normierten Nutzungsrate (103) bestimmt werden; und
- einer normierten gewichteten mittleren Betriebsdauer zwischen Problemen (8) durch Dividieren des besagten gewichteten Zeitfensters (202) durch die besagte normierte gewichtete Anzahl von Problemen (204).

**8.** Vorrichtung (1) nach Anspruch 6, wobei:

- das besagte Nutzungsüberwachungsgerät (100) weiterhin angepasst ist zum Normieren der besagten Nutzungsrate (101) über das besagte mindestens eine Zeitfenster (102), wodurch eine normierte Nutzungsrate (103) erzeugt wird;
- wobei die besagte Einheit für die mittlere Betriebsdauer zwischen Neusynchronisationen (400) weiterhin angepasst ist zum Bestimmen:

- einer normierten gewichteten Dauer zwischen zwei aufeinander folgenden Neusynchronisationen (403) aus den besagten Neusynchronisationen (402) während des besagten mindestens einen Zeitfensters (102) mit einer oder mehreren Gewichtungen, die in Abhängigkeit von der besagten Nutzungsrate (101) bestimmt werden;
- einer normierten gewichteten mittleren Betriebsdauer zwischen Neusynchronisationen (9) durch Dividieren des besagten gewichteten Zeitfensters (102) durch die besagte normierte gewichtete Dauer zwischen zwei aufeinanderfolgenden Neusynchronisationen (403).

**9.** Vorrichtung (1) nach Anspruch 1, wobei die besagte Einheit für die mittlere Betriebsdauer zwischen Problemen (200) angepasst ist zum Überspringen der besagten Bestimmung des besagten gewichteten Zeitfensters (202) und der besagten entsprechenden gewichteten Anzahl von Problemen (203), wenn die besagte Nutzungsrate (101) unter einem vorausdefinierten Nutzungsratengrenzwert (10) während eines oder mehreren entsprechenden Zeitfenstern (102) liegt.

**10.** Verfahren zum Schätzen der Stabilität eines digitalen Teilnehmeranschlusses (2), wobei das besagte Verfahren folgenden Schritt umfasst:

- Überwachen von Problemen (201), die an dem besagten digitalen Teilnehmeranschluss (2) während mindestens eines Zeitfensters (102) auftreten;

wobei das besagte Verfahren weiterhin folgende Schritte umfasst:

- Überwachen einer Nutzungsrate (101) des besagten digitalen Teilnehmeranschlusses (2) während des besagten mindestens einen Zeitfensters (102);
- Bestimmen eines gewichteten Zeitfensters (202) aus dem besagten mindestens einen Zeitfenster (102) mit einer oder mehreren Gewichtungen, die in Abhängigkeit von der besagten Nutzungsrate (101) bestimmt werden;
- Bestimmen einer gewichteten Anzahl von Problemen (203) aus den besagten Problemen (201), die während des besagten mindestens einen Zeitfensters (102) überwacht werden, mit einer oder mehreren Gewichtungen, die in Abhängigkeit von der besagten Nutzungsrate (101) bestimmt werden;
- Bestimmen einer gewichteten mittleren Betriebsdauer zwischen Problemen (4) durch Dividieren des besagten gewichteten Zeitfensters (202) durch die besagte gewichtete Anzahl von Problemen (203); und
- Vergleichen der besagten berechneten gewichteten mittleren Betriebsdauer zwischen Problemen (4) mit einem oder mehreren Stabilitätsgrenzwerten (5), um den besagten digitalen Teilnehmeranschluss (2) als stabil oder instabil zu klassifizieren, wenn die besagte gewichtete mittlere Betriebsdauer zwischen Problemen (4) höher oder geringer ist als der besagte eine oder die mehreren Stabilitätsgrenzwerte (5).

11. Computerprogramm mit Softwarecode, angepasst zum Durchführen des Verfahrens nach Anspruch 10.

12. Computerlesbares Speichermedium mit computerausführbaren Anweisungen, die bei Ausführung durch ein Rechensystem ein Verfahren nach Anspruch 10 durchführen.

**Revendications**

1. Dispositif (1) d'estimation de la stabilité d'une ligne d'abonné numérique (2), ledit dispositif (1) comprenant :

- une unité de temps moyen entre défaillances (200) adaptée pour surveiller des défaillances (201) qui se produisent sur ladite ligne d'abonné numérique (2) durant au moins une fenêtre de temps (102) ;
- ledit dispositif (1) comprend en outre un dispositif de surveillance d'utilisation (100) adapté pour surveiller un taux d'utilisation (101) de ladite ligne d'abonné numérique (2) durant ladite au moins une fenêtre de temps (102) ;
- ladite unité de temps moyen entre défaillances (200) est en outre adaptée pour :

  - déterminer une fenêtre de temps pondérée (202) à partir de ladite au moins une fenêtre de temps (102) avec une ou plusieurs pondération(s) déterminée(s) en fonction dudit taux d'utilisation (101) ;
  - déterminer un nombre pondéré de défaillances (203) à partir desdites défaillances (201) surveillées durant ladite au moins une fenêtre de temps (102) avec une ou plusieurs pondération(s) déterminée(s) en fonction dudit taux d'utilisation (101) ;
  - déterminer un temps moyen pondéré entre défaillances (4) en divisant ladite fenêtre de temps pondérée (202) par ledit nombre pondéré de défaillances (203) ; et

ledit dispositif (1) comprenant en outre une unité de classification de stabilité (300) adaptée pour comparer ledit temps moyen pondéré entre défaillances (4) calculé à un ou plusieurs seuils de stabilité (5) pour classifier ladite ligne d'abonné numérique (2) comme stable ou instable lorsque ledit temps moyen pondéré entre défaillances (4) est supérieur ou inférieur audit ou auxdits seuils de stabilité (5).

2. Dispositif (1) selon la revendication 1, dans lequel, dans ladite ou lesdites pondérations, une pondération associée à un taux d'utilisation (101) élevé est une valeur numérique supérieure à une pondération associée à un taux d'utilisation (101) faible.

3. Dispositif (1) selon la revendication 1, dans lequel ladite ou lesdites pondérations sont des valeurs numériques dans la plage comprise entre zéro et un.

4. Dispositif (1) selon la revendication 1, dans lequel ladite ou lesdites pondérations sont égales à :

- zéro lorsque ledit taux d'utilisation (101) est inférieur à un seuil d'utilisation prédéfini (6) ; et

- un lorsque ledit taux d'utilisation (101) est supérieur à un seuil d'utilisation prédéfini (6).

5. Dispositif (1) selon la revendication 1, dans lequel ladite ou lesdites pondérations sont proportionnelles audit taux d'utilisation (101).

6. Dispositif (1) selon la revendication 1, dans lequel :

- ledit dispositif (1) comprend en outre une unité de temps moyen entre re-synchronisations (400) adaptée pour surveiller des re-synchronisations (401) sur ladite ligne d'abonné numérique (2) ;

et dans lequel ladite unité de temps moyen entre re-synchronisations (400) est en outre adaptée pour déterminer :

- une durée pondérée entre deux re-synchronisations consécutives (402) à partir desdites re-synchronisations (401) durant ladite au moins une fenêtre de temps (102) avec une ou plusieurs pondération(s) déterminée(s) en fonction dudit taux d'utilisation (101) ; et
- un temps moyen pondéré entre re-synchronisations (7) en divisant ladite au moins une fenêtre de temps pondérée (202) par ladite durée pondérée entre deux re-synchronisations consécutives (402).

7. Dispositif (1) selon la revendication 1, dans lequel :

- ledit dispositif de surveillance d'utilisation (100) est en outre adapté pour normaliser ledit taux d'utilisation (101) par rapport à ladite au moins une fenêtre de temps (102), générant ainsi un taux d'utilisation normalisé (103) ;
- ladite unité de temps moyen entre défaillances (200) est en outre adaptée pour déterminer :

  - un nombre pondéré normalisé de défaillances (204) à partir desdites défaillances (201) surveillées durant ladite au moins une fenêtre de temps (102) avec une ou plusieurs pondération(s) déterminée(s) en fonction dudit taux d'utilisation normalisé (103) ; et
  - un temps moyen pondéré normalisé entre défaillances (8) en divisant ladite fenêtre de temps pondérée (202) par ledit nombre pondéré normalisé de défaillances (204).

8. Dispositif (1) selon la revendication 6, dans lequel :

- ledit dispositif de surveillance d'utilisation (100) est en outre adapté pour normaliser ledit taux d'utilisation (101) par rapport à ladite au moins une fenêtre de temps (102), générant ainsi un taux d'utilisation normalisé (103) ;
- ladite unité de temps moyen entre re-synchronisations (400) est en outre adaptée pour déterminer :

  - une durée pondérée normalisée entre deux re-synchronisations consécutives (403) à partir desdites re-synchronisations (402) durant ladite au moins une fenêtre de temps (102) avec une ou plusieurs pondération(s) déterminée(s) en fonction dudit taux d'utilisation normalisé (101) ;
  - un temps moyen pondéré normalisé entre re-synchronisations (9) en divisant ladite fenêtre de temps pondérée (102) par ladite durée pondérée normalisée entre deux re-synchronisations consécutives (403).

9. Dispositif (1) selon la revendication 1, dans lequel ladite unité de temps moyen entre défaillances (200) est adaptée pour ignorer ladite détermination de ladite fenêtre de temps pondérée (202) et ledit nombre pondéré correspondant de défaillances (203) lorsque ledit taux d'utilisation (101) est inférieur à un seuil de taux d'utilisation prédéfini (10) durant une ou plusieurs fenêtres de temps (102) correspondantes.

10. Procédé d'estimation de la stabilité d'une ligne d'abonné numérique (2), ledit procédé comprenant les étapes suivantes :

- surveiller des défaillances (201) qui se produisent sur ladite ligne d'abonné numérique (2) durant au moins une fenêtre de temps (102) ;

ledit procédé comprenant en outre les étapes suivantes :

- surveiller un taux d'utilisation (101) de ladite ligne d'abonné numérique (2) durant ladite au moins une fenêtre de temps (102) ;
- déterminer une fenêtre de temps pondérée (202) à partir de ladite au moins une fenêtre de temps (102) avec une ou plusieurs pondération(s) déterminée(s) en fonction dudit taux d'utilisation (101) ;
- déterminer un nombre pondéré de défaillances (203) à partir desdites défaillances (201) surveillées durant ladite au moins une fenêtre de temps (102) avec une ou plusieurs pondération(s) déterminée(s) en fonction dudit taux d'utilisation (101) ;
- déterminer un temps moyen pondéré entre défaillances (4) en divisant ladite fenêtre de temps pondérée (202) par ledit nombre pondéré de défaillances (203) ; et
- comparer ledit temps moyen pondéré entre défaillances (4) calculé à un ou plusieurs seuils de stabilité (5) pour classifier ladite ligne d'abonné numérique (2) comme stable ou instable lorsque ledit temps moyen pondéré entre défaillances (4) est supérieur ou inférieur audit ou auxdits seuils de stabilité (5).

**11.** Programme informatique comprenant un code logiciel adapté pour exécuter le procédé selon la revendication 10.

**12.** Support de stockage lisible par ordinateur comprenant des instructions exécutables par ordinateur qui, lorsqu'elles sont exécutées par un système informatique, mettent en oeuvre un procédé selon la revendication 10.

usage rate [kbit/s]

number of errors

Prior Art
Fig. 1

Fig. 2

Fig. 3

EP 2 999 202 B1

Fig. 4

Fig. 5

EP 2 999 202 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2073446 A1

**Non-patent literature cited in the description**

- Dynamic Line Management for Digital Subscriber Lines. *Alcatel-Lucent*

- **JOCHEN MAES et al.** Autonomous Dynamic Optimization for Digital Subscriber Line Networks. *Alcatel-Lucent*